# EUROPÄISCHE PATENTSCHRIFT

(11) **EP 1 602 807 B1**
(45) Veröffentlichungstag und Bekanntmachung des Hinweises auf die Patenterteilung: **27.10.2010**
(21) Anmeldenummer: 05103809.9
(22) Anmeldetag: 09.05.2005
(51) Int. Cl.: F01N 9/00, B01D 46/46

(54) **Verfahren zur Überwachung eines Partikelfilters**
Process for controlling a particle filter
Procédé de contrôle d'un filtre à particules

(30) Priorität: 01.06.2004 DE 102004026589
(43) Veröffentlichungstag der Anmeldung: 07.12.2005
(73) Patentinhaber: Continental Automotive GmbH, 30165 Hannover (DE)
(72) Erfinder: Ante, Johannes, 93055, Regensburg (DE); Birkner, Christian, 93173, Irlbach (DE); Östreicher, Wolfgang, 93047, Regensburg (DE)

(56) Entgegenhaltungen:
- EP-A- 1 087 114
- DE-A- 10 213 170
- US-A- 4 986 069
- US-A1- 2004 011 030

## Beschreibung

Die Erfindung betrifft ein Verfahren zur Überwachung eines Partikelfilters.

Moderne Dieselmotoren finden auf dem Pkw Markt aufgrund ihrer hohen Leistung, guten Drehmoment-Charakteristik und niedrigen Verbrauchs, zunehmend Akzeptanz. Moderne Einspritzsysteme erlauben eine rußarme Verbrennung, jedoch ist es mit innermotorischen Maßnahmen äußerst schwierig, die Schadstoffklasse EURO 4 oder höher zu erreichen.

Die Abgasmessung im Rahmen der gesetzlich vorgeschriebenen Abgasuntersuchung (AU) erfolgt durch Messung der Abgastrübung während der Motor unter Volllast frei beschleunigt. Als Messgerät kommt ein optisches Opazimeter zum Einsatz. Ein im Pkw einbaufähiges Opazimeter zur On-Board Diagnose (OBD) der Abgastrübung ist derzeit nicht verfügbar. Käufliche Systeme wie sie zur Abgasuntersuchung verwendet werden, sind zu groß und zu teuer.

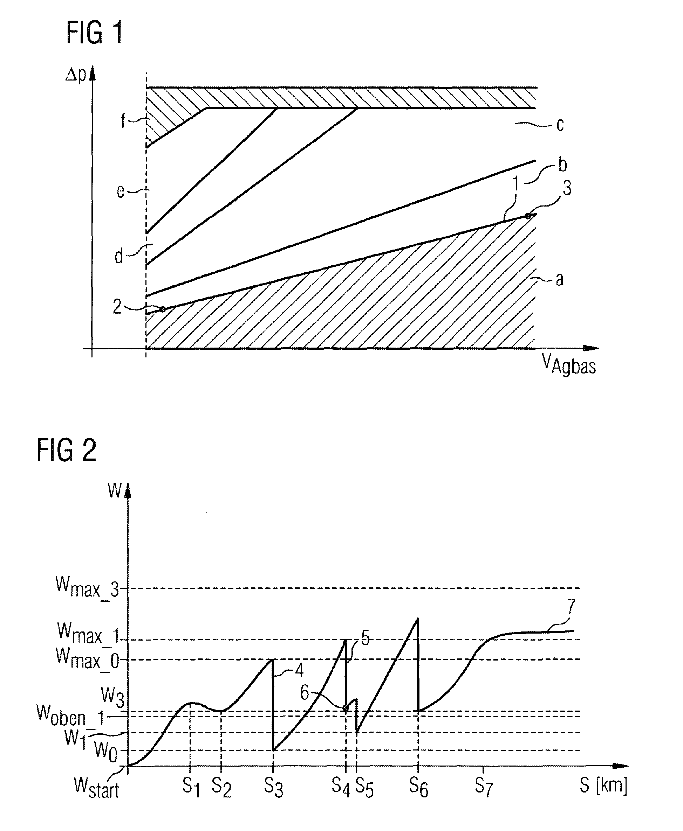

Bekannte Dieselrußfiltersysteme überwachen den Druckverlust am Dieselrußfilter. Der Abgasvolumenstrom durch den Dieselrußfilter wird aus den Daten der Motorsteuerung berechnet. Wird der Druckverlust Δp über den Abgasvolumenstrom V_{Abgas} aufgetragen, erhält man ein in Figur 1 abgebildetes Kennfeld. Dabei wird angenommen, dass der Differenzdruck Δp am Filter seinen bestimmten Beladungszustand des Rußfilters (z. B. 0% Rußbeladung) sich streng monoton mit dem Abgasvolumenstrom V_{abgas} ändert. Dies wird beispielsweise durch die zwischen den Bereichen a und b abgebildeten Kurve 1 gezeigt. Im Leerlaufbetrieb der Brennkraftmaschine befindet sich diese in Punkt 2. Nimmt die Last der Brennkraftmaschine zu, so wandert der Betriebszustand der Brennkraftmaschine entlang der Kurve 1 bis zur maximalen Last in Punkt 3. Somit kann jedem Beladungszustand des Rußfilters eine bestimmte Steigung zugeordnet werden, die abhängig von dem Volumenstrom der Brennkraftmaschine ist. Die Steigung der Kurve wird durch den Quotienten des Differenzdrucks und des Abgasvolumenstromes bestimmt (auch W-Wert genannt). Bei normalen Fahrbetrieb wird der Russ den Filter zunehmend belegen, so das die Kurve 1 steiler wird und durch den Bereich b über den Bereich c in den Bereich d wandert. Sobald der W-Wert im d Bereich liegt, wird die Motorsteuerung die Regeneration einleiten. Dadurch wird der Filter aufgeheizt, der Russ wird verbrannt und der Filter wird regeneriert. Dabei geht der W-Wert in den Bereich b zurück. Falls der W Wert in den Bereich a sinkt, ist der Filter gebrochen, da das Abgas drucklos und ungefiltert entweichen kann. Im umgekehrten Fall, wenn der W-Wert den Bereich e bzw. f erreicht, so ist der Filter verstopft. In beiden Fällen wird die Motorsteuerung eine Fehlermeldung ausgeben. Bei diesem bekannten Dieselrußfiltersystem ist es insbesondere nachteilig, dass es nur total gebrochene Filter (fehlender Differenzdruck) oder nur ganz verstopfte Filter (zu hoher Differenzdruck) erkennen kann. Teilweise gebrochene bzw. teilweise durchgebrannte Filter können damit nicht erkannt werden.

Eine ähnlich Strategie verfolgt das in der Druckschrift US 4,986,069 vorgestellte Dieselrußfiltersystem, wobei ein K Wert berechnet wird, der proportional zum Quotienten des Differenzdrucks ^{X}/(Luftmassenstrom ^{Y} * Temperatur ^{Z}), wobei X, Y und Z zwischen 0,1 und 2 liegen. Beim Überschreiten einer bestimmten K Schwelle wird die Regeneration des Filters eingeleitet. Aussagen über den Zustand des Filters können damit nicht getroffen werden.

Somit liegt der Erfindung die Aufgabe zugrunde, ein Verfahren zur Überwachung eines Partikelfilters vorzustellen, dass ein Teilfilterdurchbruch zuverlässig erkennt.

Die Aufgabe der Erfindung wird durch die Merkmale des Anspruchs 1 gelöst.

Die Erfindung zeichnet sich durch ein Verfahren zur Überwachung eines Partikelfilters aus, der im Abgasstrang einer, insbesondere selbstzündenden, Brennkraftmaschine angeordnet ist. Das erfindungsgemäße Verfahren führt folgende Schritte durch. Zuerst wird der Druckverlust am Partikelfilter gemessen. Als nächstes wird der Abgasvolumenstrom beschafft. Aus dem die Druckverlust und dem Abgasvolumenstrom wird ein Filterbeladungswert berechnet. Dieser Filterbeladungswert wird in Abhängigkeit eines Fahrparameters aufgezeichnet. Als nächstes wird die Filterbeladungskurve nach dem Fahrparameter abgeleitet. Zuletzt wird die Ableitungskurve der Filterbeladung bewertet, wobei der Partikelfilter einen Durchbruch aufweist, wenn die Ableitung kleiner gleich 0 ist.

Mit diesem erfindungsgemäßen Verfahren ist es möglich den Partikelfilter zu überwachen, ohne zusätzliche Sensoren zu benötigen. Solange der Filter nicht gebrochen ist, wird das Abgas ausreichend gefiltert. Durch die Überwachung des Motors und durch die Überwachung der Ableitung des Filterbeladungswertes ist sichergestellt, dass in den aus dem Auspuff entweichenden Abgasen kein bzw. kaum Ruß vorhanden ist.

Eine vorteilhafte Ausgestaltung der Erfindung ist es als Fahrparameter die Betriebszeit der Brennkraftmaschine und/oder die zurückgelegte Fahrstrecke eines Kraftfahrzeugs mit der Brennkraftmaschine auszuwählen. Bei Nutzfahrzeugen, die vorzugsweise ortsgebunden betrieben werden, wird die Betriebszeit als Fahrparameter sinnvoll sein. Dagegen ist die zurückgelegte Fahrstrecke als Fahrparameter bei Pkws sinnvoll.

Als vorteilhafte Ausgestaltung der Erfindung ist es den Abgasvolumenstrom aus der ersten Temperatur die in Strömungsrichtung vor dem Filter gemessen wird, aus der durch die Brennkraftmaschine angesogenen Luft und aus der in die Brennkraftmaschine eingespritzten Kraftstoffmenge beschafft wird. Dies ist insbesondere vorteilhaft, da in Strömungsrichtung hinter dem Filter kein zusätzlicher Sensor zur Messung des Abgasvolumenstroms benötigt wird. Die Werte dazu werden aus den vorhandenen Sensoren gewonnen.

Als weitere vorteilhafte Ausgestaltung ist es die Ableitung und die Bewertung davon im mittleren Lastbereich der Brennkraftmaschine auszuführen und/oder wenn die Brennkraftmaschine steuernden Prozessor schwach ausgelastet ist. Dies ist insbesondere vorteilhaft, da die Auswertung (Ableitung, Bewertung) durchgeführt wird, wenn ausreichend Prozessorleistung zur Verfügung steht. Als Prozessor wird eine ECU (Electronic Control Unit = Elektronische Kontrolleinrichtung) verstanden. Dies bietet die Möglichkeit mit verhältnismäßig leistungsschwachen Prozessoren zu arbeiten.

Eine weitere vorteilhafte Ausgestaltung der Erfindung ist es während im Hochlastbetrieb der Brennkraftmaschine aufgezeichnete Filterbeladungswerte von der Bewertung auszuschließen. Bei lang andauernden Autobahn - Vollgasfahrten oder ähnlichen Betriebszuständen, ist das Aufheizen des Rußfilters bzw. Partikelfilters bis zur Rußzündtemperatur möglich. In diesem Fall wird der Filter nicht weiter beladen, sondern sogar ohne Eingriff der Motorsteuerung regeneriert (Selbstregeneration). Der Filterbeladungswert steigt nicht weiter an, kann sogar etwas abfallen. Somit ist es insbesondere Vorteilhaft, den Lastzustand der Brennkraftmaschine aufzunehmen, um solche entsprechenden Vollgasfahrten zu erkennen. Die Ableitung eines solchen Filterbeladungswertes dW führt zu einem Wert, der kleiner gleich 0 ist. Um Fehldiagnosen zu vermeiden, sind solche Vollgasfahrten (Hochlastbetriebe) von der Bewertung zu entfernen bzw. auszuschließen.

Eine weitere vorteilhafte Ausgestaltung der Erfindung ist es, den berechneten Filterbeladungswert in Abhängigkeit von der Anzahl der durchgeführten Regeneration des Partikelfilters zu korrigieren. Bei jeder Regeneration bleibt ein Rest an Asche auf dem Filter, die einen gewissen Strömungsverlust verursacht. Damit fällt bei jeder Regeneration der Filterbeladungswert nicht auf seinen Anfangswert zurück, sondern ist um einen bestimmten Betrag erhöht. Die Aschebeladung täuscht somit eine höhere Rußbeladung vor, als die tatsächliche vorhandene. Diesem Phänomen muss sorge getragen werden, in dem der Beladungswert korrigiert wird oder aber der Maximalwert für das Beladen des Partikelfilters nachgezogen wird, d. h. dieser Maximalwert wird korrigiert statt der Filterbeladungswert. Dies ist insbesondere vorteilhaft, da die Regeneration eines alten und aschegeschwächten Filters zum spätest möglichen Zeitpunkt durchgeführt werden kann. Darüber hinaus wird die Kapazität des Filters maximal ausgenutzt, dass zu einem Kraftstoffersparnis führt.

Weitere vorteilhafte Ausgestaltungen der Erfindung sind in den übrigen abhängigen Ansprüchen angegeben. Die Erfindung wird nachfolgend unter Bezugnahme auf die schematische Zeichnung beispielhaft erläutert. Dabei zeigen:
- Figur 1: ein Kennfeld des Druckverlustes in Abhängigkeit von Abgasvolumenstroms,
- Figur 2: die Aufzeichnung des Filterbeladungswertes in Abhängigkeit von der zurückgelegten Strecke,

- Figur 3A, B: Ablaufdiagramme des erfindungsgemäßen Verfahrens, und
- Figur 4: ein Blockschaltbild des Rußmodells.

In Figur 1 wird ein Kennfeld von dem Differenzdruck in Abhängigkeit vom Abgasvolumenstrom gezeigt. Der Bereich a gibt an, wenn der Partikelfilter defekt ist. Der Bereich b gibt an, wenn der Filter regeneriert ist. Der Bereich c gibt an, dass der Filter beladen ist. Der Bereich d gibt an, dass der Filter regenerierungsbedürftig ist. Der Bereich e gibt an, dass der Filter überlastet ist. Beim Regenerieren eines überlasteten Filters wird zuviel Wärme erzeugt, so dass der Filter in diesem Bereich e durch die Regeneration dauerhaft beschädigt wird. Der Bereich f zeigt einen totalverstopften Filter an.

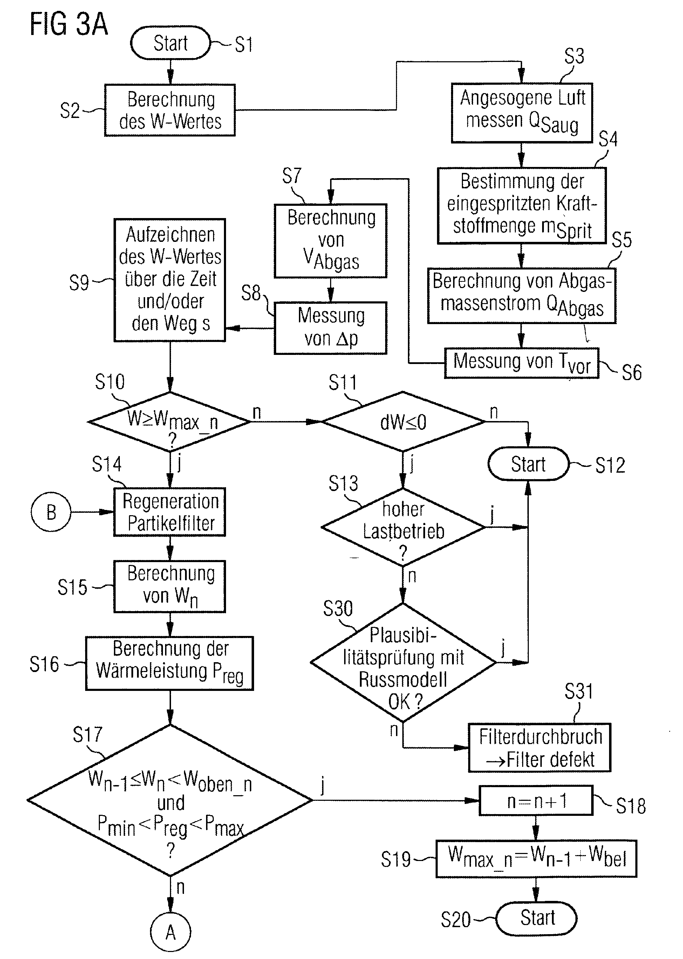

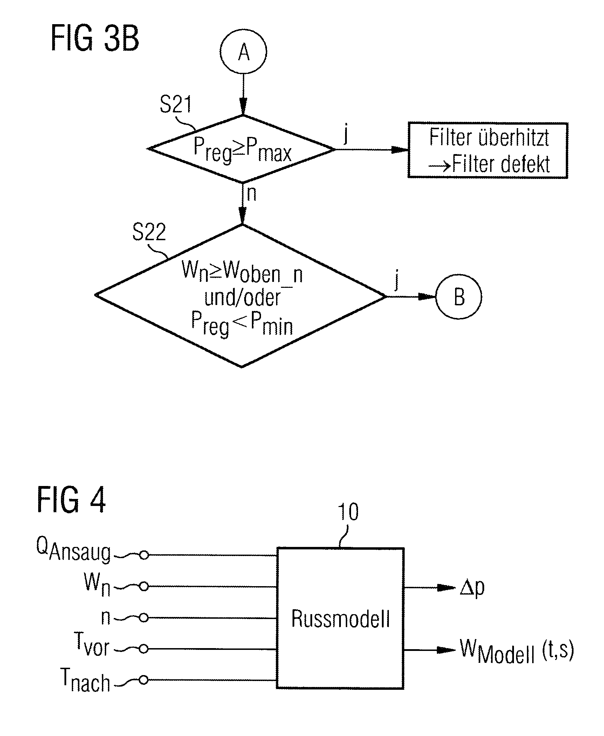

Die Figuren 3A und B geben einen Flussdiagramm zur Ausführung des erfindungsgemäßen Verfahrens wieder. In Schritt S1 wird das Verfahren gestartet. In Schritt S2 wird der Filterbeladungswert W berechnet. Diese Berechnung erfolgt durch die Schritte S3 bis S8. In Schritt S3 wird zuerst die angezogene Luft Q_{Saug} gemessen. Aus der Motorsteuerung wird in Schritt S4 die eingespritzte Kraftstoffmenge m_{Sprit} bestimmt. Aus der angezogenen Luft Q_{Saug} und der bestimmten Kraftstoffmenge wird der Abgasmassenstrom Q_{Abgas} in Schritt S5 berechnet. In Schritt S6 wird die Temperatur in Strömungsrichtung vor dem Filter Tᵥₒᵣ gemessen. Aus dem Abgasmassenstrom Q_{Abgas} und der Temperatur Tᵥₒᵣ wird der Abgasvolumenstrom V_{Abgas} in Schritt S7 berechnet. Der am Partikelfilter verursachte Druckabfall Δp wird in Schritt S8 gemessen. Der W-Wert wird dadurch berechnet, in dem der Quotient aus Δp und Abgasvolumenstrom V_{Abgas} gebildet wird.

Der Filterbeladungswert W wird in Abhängigkeit von der Betriebszeit t und/oder in Abhängigkeit von der zurückgelegten Strecke (Weg s) aufgezeichnet. Eine solche Aufzeichnung in Abhängigkeit des zurückgelegten Wegs ist beispielsweise in Figur 2 gezeigt.

Im Weiteren wird anhand der Figuren 2 und 3 das erfindungsgemäße Verfahren erläutert. In Schritt S10 wird geprüft, ob der momentane Filterbeladungswert W einen Maximalwert für das Beladen des Partikelfilters W_{max_n} überschritten hat. Index n steht für die Anzahl der von der Steuerung durchgeführten Regenerationen. Ist der momentane Filterbeladungswert unterhalb des Maximalwerts W_{max_n}, so wird geprüft, ob die Ableitung dW in Schritt S11 kleiner gleich 0 ist. Abgeleitet wird der Filterbeladungswert nach der Zeit t oder/und nach dem zurückgelegten Weg s. Ist die Ableitung größer Null, so geht es in Schritt S12 weiter, der eine Sprungbedingung zum Start in Schritt S1 wiedergibt. Mit dieser Schleife wird kontinuierlich überprüft, ob der Filterbeladungswert eine Schwelle (Maximalwert für das Beladen des Partikelfilters) W_{max_n} überschritten hat und ob die Ableitung kleiner gleich 0 ist. Die Bedingung in Schritt S10 gibt an, bis wann der Partikelfilter regeneriert werden muss. In Schritt S11 wird überprüft, ob der Kurvenverlauf des Filterbeladungswertes ein Plateau bzw. eine negative Steigung aufweist. Ist dies der Fall muss zusätzlich in Schritt S13 überprüft werden, ob sich im Plateaubereich die Brennkraftmaschinen in hohem Lastbetrieb befand. In diesem Fall wird der Filter nicht weiter beladen. Er kann sich sogar selbst regenerieren (Selbstregeneration). Der Filterbeladungswert steigt nicht weiter an. Dies ist beispielsweise in Figur 2 zwischen den Strecken S₁ und S₂ zu sehen. Der Verlauf des Filterbeladungswertes über der zurückgelegten Strecke zwischen S₁ und S₂ weist sogar eine negative Steigung auf. Im Ablaufdiagramm wird in diesem Fall auf S12 zur Startbedingung gesprungen. Eine Alternative solche Bereiche aus der Betrachtung bzw. aus der Bewertung auszuschließen, ist es diese beiden Punkte S₁ und S₂ zusammenzufassen, wobei der dazwischenlegende Bereich wegfällt.

Mit der Zeit wird der Partikelfilter weiter beladen bis die Bedingung in Schritt S10 erfüllt wird. Dies tritt beispielsweise in Figur im Punkt S3 ein. Dabei wird der Schwellwert W_{max_0} überschritten. Anzumerken ist, dass der Index n gleich Null ist. Die Null steht dafür, dass der Partikelfilter zuvor niemals durch die Steuerung regeneriert wurde (z.B. bei einem Neufahrzeug oder bei einem Partikelfilteraustausch). In Schritt S14 erfolgt die Regeneration des Filters. Dies ist in Punkt S₃ an der Flanke 4 zu erkennen. Dabei sinkt der Filterbeladungswert nicht auf den Ursprungswert W_{Start} zurück, sondern fällt auf einen Anfangsfilterbeladungszustand W₀ zurück, der etwas höher liegt als der ursprüngliche anfängliche Filterbeladungszustand W_{Start}. Dies liegt daran, dass bei der Verbrennung des Rußes Asche gebildet wird, die im Filter verbleibt und einen gewissen Strömungsverlust verursacht. Deshalb ist es wichtig, in Schritt S15 diesen Startwert nach der n-ten Regeneration Wₙ zu berechnen. Die exotherme Reaktion des Rußverbrennungsvorgangs erzeugt Energie, wobei die daraus entstehende Temperaturerhöhung durch einen zweiten Temperatursensor in Strömungsrichtung nach dem Filter gemessen wird. Aus diesem Temperaturwert T_{nach} wird die Wärmeleistung P_{Reg} in Schritt S16 berechnet. In Schritt S17 wird geprüft, ob bei der Regeneration genügend Wärmeleistung P_{Reg} produziert wurde (größer als ein minimaler Wert Pₘᵢₙ und kleiner als ein maximaler Wert Pₘₐₓ). Wird bei der Regeneration zuviel Wärmeleistung entwickelt, so wird der Filter zu heiß und wird dauerhaft beschädigt. Im umgekehrten Fall, bei dem zu wenig Wärmeleistung P_{Reg} produziert wird, bedeutet dies, dass der Filter nicht ausreichend regeneriert wurde und im Filter nach wie vor ein gewisser Anteil an Ruß vorhanden ist. In Schritt S17 wird des Weiteren geprüft, ob der Anfangswert Wₙ unterhalb eines zweiten Schwellwerts W_{oben_n} liegt. Bei der Regeneration im Punkt S₃ ist dies der Fall, so dass der Schritt S18 folgt. Dabei wird lediglich der Index n um eins erhöht. In Schritt S19 wird der Maximalwert für das Beladen des Partikelfilters (erste Schwellwert) W_{max_n} nachgezogen. Dabei wird lediglich der vorhergehende Anfangswert der n-ten Regeneration Wₙ₋₁ mit einem Partikelbeladewert W_{bel} addiert. Damit ist gewährleistet, dass der Filter maximal beladen werden kann ohne dabei zuviel Ruß aufzunehmen. Diese Alternative ermöglicht ein Kraftstoffersparnispotential bei der Regeneration. Danach geht es in Schritt S20 zur Startbedingung zu S1 weiter.

Sollte die Regeneration nicht erfolgreich sein, wie beispielsweise in Punkt S₄, bei dem die Bedingung aus Schritt S21 nicht erfüllt ist (die erzeugte Wärmeleistung ist zu gering) wird in Schritt S22 geprüft, ob der Anfangsstartwert Wₙ über dem zweiten Schwellwert W_{oben_n} liegt. In Punkt S₄ ist der Index n gleich 1. Die Flanke 5 in Punkt S₄ bleibt über der zweiten Schwelle W_{oben_1}, denn die Regeneration bleibt im Punkt 6 hängen. Nach diesem Schritt S22 wird die Regeneration bei günstigen Betriebsbedingungen (Teillastbereich) der Brennkraftmaschine bzw. niedrige Auslastung des Motorprozesses (ECU) in Schritt S14 erneut wiederholt. In Figur 2 ist dies im Punkt S₅ abgebildet. Die erneute Regeneration unterschreitet die zweite Schwelle W_{oben_1} und erreicht sogar den Anfangswert W₁.

In Schritt S6 wurde der Filter erneut erfolgreich regeneriert und dabei erreicht der Anfangsfilterbeladungswert W₃ der wie zu erkennen ist, über den anderen vorhergehenden Anfangsbeladungswerte liegt. Bei diesem konkreten Fall wird bei der kontinuierlichen Prüfungsschleife zwischen Schritt S1 und S12 festgestellt, dass im Punkt S₇ sich der vierte Beladungswert nicht mehr ändert und folglich dessen Ableitung dW in Schritt S11 gleich Null wird. Nach der gefahrenen Strecke S₇ befindet sich die Brennkraftmaschine nicht im Hochlastbetrieb, so dass nach dem Schritt S13 der Schritt S30 folgt. Mit Hilfe eines Rußmodells, das in Figur 4 schematisch abgebildet ist, wird der am Partikelfilter zu erwartende Druckverlust Δp_{Modell} und der am Partikelfilter zu erwartende Filterbeladungswert W_{Modell} berechnet. Weichen die gemessenen Werte Δp und W zu sehr von den aus dem Rußmodell berechneten Werten Δp_{Modell} und W_{Modell} ab, so wird in Schritt S31 am Plateau 7 ein Filterdurchbruch erkannt.

Liegen die gemessenen Werte innerhalb der berechneten Werte, so folgt Schritt S12 der auf S1 springt.

In Figur 4 wird mit Hilfe des Rußmodells 10 aus dem Ansaugvolumenstrom Q_{Saug}, aus dem Startwert nach der n-ten Regenation Wₙ, aus der Anzahl von der Steuerung durchgeführten Regeneration n und aus den ersten und zweiten Temperaturen Tᵥₒᵣ und T_{nach} die zu erwartenden Werte Δp_{Modell} und W_{Modell} berechnet. Zur Verfeinerung des Rußmodells können weitere Filtergrößen berücksichtigt werden.

## Patentansprüche

1. Verfahren zur Überwachung eines Partikelfilters, der im Abgasstrang einer, insbesondere selbstzündenden, Brennkraftmaschine angeordnet ist, durch folgende Schritte **gekennzeichnet**:
a) Messung des Druckverlustes (Δp) am Partikelfilter,
b) Beschaffung des Abgasvolumenstromes (V_{Abgas}),
c) Berechnung eines Filterbeladungswertes (W) aus dem Druckverlust (Δp) und dem Abgasvolumenstrom (V_{Abgas}),
d) Aufzeichnung des Filterbeladungswertes (W) in Abhängigkeit eines Fahrparameters,
e) Ableitung (dW) des Filterbeladungswertes (W) nach dem Fahrparameter
f) Bewertung der Ableitung der Filterbeladung, wobei der Partikelfilter einen Durchbruch aufweist, wenn die Ableitung (dW) kleiner gleich Null ist.

2. Verfahren nach Anspruch 1, **dadurch gekennzeichnet, dass** der Fahrparameter die Betriebszeit (t) der Brennkraftmaschine und/oder die zurückgelegte Fahrstrecke (s) eines Kraftfahrzeuges mit der Brennkraftmaschine ist.

3. Verfahren nach mindestens einem vorherigen Ansprüche, **dadurch gekennzeichnet, dass** in Schritt b) der Abgasvolumenstrom (V_{Abgas}) mit Hilfe eines Luftmassenmessers gemessen wird, der in Strömungsrichtung nach dem Partikelfilter angeordnet ist.

4. Verfahren nach mindestens einem der Ansprüche 1 und 2, **dadurch gekennzeichnet, dass** in Schritt b) der Abgasvolumenstrom (V_{Abgas}) aus einer ersten Temperatur (Tᵥₒᵣ), die in Strömungsrichtung vor dem Filter gemessen wird, aus der durch die Brennkraftmaschine angesogenen Luft (Q_{Saug}) und aus der in die Brennkraftmaschine eingespritzten Kraftstoffmenge (mₛₚᵣᵢₜ) berechnet wird.

5. Verfahren nach mindestens einem der vorherigen Ansprüche, **dadurch gekennzeichnet, dass** Schritte e) und/oder f) im mittleren Lastbereich durchgeführt wird.

6. Verfahren nach mindestens einem der vorherigen Ansprüche, **dadurch gekennzeichnet, dass** Schritte e) und/oder f) ausgeführt wird, wenn der die Brennkraftmaschine steuernde Prozessor (ECU) schwach ausgelastet ist.

7. Verfahren nach mindestens einem der vorherigen Ansprüche, **dadurch gekennzeichnet, dass** während dem Hochlastbetrieb der Brennkraftmaschine aufgezeichnete Filterbeladungswerte (W) von der Bewertung in Schritt f) ausgeschlossen sind.

8. Verfahren nach mindestens einem der vorherigen Ansprüche, **dadurch gekennzeichnet, dass** in Schritt c) der Filterbeladungswert (W) in Abhängigkeit von der Anzahl (n) der durchgeführten Regenerationen des Partikelfilters korrigiert wird.

9. Verfahren nach mindestens einem der vorherigen Ansprüche, **dadurch gekennzeichnet, dass** in Schritt f) außerdem eine mit Hilfe eines Partikelmodells durchgeführte Plausibilitätsprüfung nicht erfüllt wird.

10. Verfahren nach Anspruch 9, **dadurch gekennzeichnet, dass** das Partikelmodell aus der ersten (Tᵥₒᵣ) und aus einer in Strömungsrichtung nach dem Partikelfilter gemessenen zweiten (T_{nach}) Temperatur und aus dem Ansaugvolumenstrom (V_{Saug}) den zu erwartenden Druckverlust (Δp_{Modell}) und den zu erwartenden Filterbeladungswert (W_{Modell}) berechnet.

## Claims

1. Method for monitoring a particle filter, which is arranged in the exhaust gas system of a, particularly self-igniting, internal combustion engine, **characterised by** the following steps:
a) Measuring the pressure loss (Δp) at the particle filter,
b) Obtaining the volumetric flow of exhaust gas (V_{Abgas}),
c) Calculating a filter load value (W) from the pressure loss (Δp) and the volumetric flow of exhaust gas (V_{Abgas}),
d) Recording the filter load value (W) as a function of a drive parameter,
e) Differentiating (dW) the filter load value (W) according to the drive parameter
f) Evaluating the differentiation of the filter load, with the particle filter demonstrating breakdown, when the differentiation (dW) is less than or equal to zero.

2. Method according to claim 1, **characterised in that** the drive parameter is the operating time (t) of the internal combustion engine and/or the distance covered (s) by a vehicle with the internal combustion engine.

3. Method according to at least one of the preceding claims, **characterised in that** in step b) the volumetric flow of exhaust gas (V_{Abgas}) is measured using an air mass sensor, which is arranged in the flow direction after the particle filter.

4. Method according to at least one of claims 1 and 2, **characterised in that** in step b) the volumetric flow of exhaust gas (V_{Abgas}) is calculated from a first temperature (Tᵥₒᵣ), which is measured in the flow direction before the filter, from the air taken in by the internal combustion engine (Q_{saug}) and from the quantity of fuel injected into the internal combustion engine (mₛₚᵣᵢₜ).

5. Method according to at least one of the preceding claims, **characterised in that** steps e) and/or f) are implemented in the mean load range.

6. Method according to at least one of the preceding claims, **characterised in that** steps e) and/or f) are executed, when the processor (ECU) controlling the internal combustion engine is subject to a low level of utilisation.

7. Method according to at least one of the preceding claims, **characterised in that** filter load values (W) recorded during high-load operation of the internal combustion engine are excluded from the evaluation in step f).

8. Method according to at least one of the preceding claims, **characterised in that** in step c) the filter load value (W) is corrected as a function of the number (n) of particle filter regeneration operations carried out.

9. Method according to at least one of the preceding claims, **characterised in that** in step f) the conditions of a plausibility test carried out using a particle model are also not satisfied.

10. Method according to Claim 9, **characterised in that** the particle model calculates the pressure loss to be expected (Δp_{Modell}) and the filter load value to be expected (W_{Modell}) from the first temperature (Tᵥₒᵣ) and from a second temperature measured in the flow direction after the particle filter (T_{nach}) and from the volumetric flow taken in (V_{saug}).

## Revendications

1. Procédé de surveillance d'un filtre à particules qui est aménagé dans la ligne d'échappement d'un moteur à combustion interne, en particulier à auto-allumage, **caractérisé par** les étapes suivantes consistant à :
a) mesurer la perte de pression (Δp) au niveau du filtre à particules,
b) fournir le débit volumétrique de gaz d'échappement (V_{gaz} d'échappement),
c) calculer une valeur de charge de filtre (W) à partir de la perte de pression (Δp) et du débit volumétrique de gaz d'échappement (V_{gaz} d'échappement),
d) enregistrer la valeur de charge de filtre (W) en fonction d'un paramètre de conduite,
e) dériver (dW) la valeur de charge de filtre (W) en fonction du paramètre de conduite, et
f) estimer la dérive de la charge de filtre, en déduisant que le filtre à particules présente une rupture lorsque la dérive (dW) est inférieure ou égale à zéro.

2. Procédé selon la revendication 1, **caractérisé en ce que** le paramètre de conduite est le temps de fonctionnement (t) du moteur à combustion interne et/ou le ou les trajets parcourus par un véhicule automobile avec le moteur à combustion interne.

3. Procédé selon au moins l'une quelconque des revendications précédentes, **caractérisé en ce qu'**à l'étape b),le débitvolumétrique de gaz d'échappement (V_{gaz d'échappement}) est mesuré à l'aide d'un appareil de mesure de masse d'air, qui est aménagé dans le sens d'écoulement après le filtre à particules.

4. Procédé selon au moins l'une quelconque des revendications 1 et 2, **caractérisé en ce qu'**à l'étape b), le débit volumétrique de gaz d'échappement (V_{gaz d'écnappement}) est calculé àpartir d'une première température (Tₐᵥₐₙₜ), qui est mesurée dans le sens d'écoulement avant le filtre, à partir de l'air aspiré par le moteur à combustion interne (Q_{aspiré}) et à partir de la quantité de carburant injectée dans le moteur à combustion interne (m_{injection}).

5. Procédé selon au moins l'une quelconque des revendications précédentes, **caractérisé en ce que** les étapes e) et/ou f) sont effectuées dans la zone de charge moyenne.

6. Procédé selon au moins l'une quelconque des revendications précédentes, **caractérisé en ce que** les étapes e) et/ou f) sont effectuées si le processeur (ECU) commandant le moteur à combustion interne est faiblement occupé.

7. Procédé selon au moins l'une quelconque des revendications précédentes, **caractérisé en ce que** les valeurs de charge de filtre (W) enregistrées pendant le fonctionnement à charge élevée du moteur à combustion interne sont exclues de l'estimation à l'étape f).

8. Procédé selon au moins l'une quelconque des revendications précédentes, **caractérisé en ce qu'**à l'étape c), la valeur de charge de filtre (W) est corrigée en fonction du nombre (n) de régénérations réalisées du filtre à particules.

9. Procédé selon au moins l'une quelconque des revendications précédentes, **caractérisé en ce qu'**à l'étape f), un contrôle de vraisemblance réalisé à l'aide d'un modèle de particule n'est en outre pas rempli.

10. Procédé selon la revendication 9, **caractérisé en ce que** le modèle de particule calcule, à partir de la première température (Tₐᵥₐₙₜ) et d'une seconde température (T_{après}) mesurée dans le sens d'écoulement après le filtre à particules et à partir du débit volumétrique d'aspiration (V_{aspiré}), la perte de pression (Δp_{modèle}) et la valeur de charge de filtre (W_{modèle}) à escompter.
